(19) Europäisches Patentamt
European Patent Office
Office européen des brevets

(11) **EP 4 760 378 A1**

(12) **EUROPEAN PATENT APPLICATION**

(43) Date of publication:
**17.06.2026 Bulletin 2026/25**

(21) Application number: **25223787.0**

(22) Date of filing: **16.12.2025**

(51) International Patent Classification (IPC):
**G02F 1/01** (2006.01)  **G02F 1/21** (2006.01)
**G02F 1/225** (2006.01)

(52) Cooperative Patent Classification (CPC):
**G02F 1/0123; G02F 1/0121; G02F 1/212;
G02F 1/225; G02F 1/2257;** G02F 2201/58

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.12.2024 US 202463734256 P**

(71) Applicant: **Marvell Asia Pte Ltd
Singapore 369522 (SG)**

(72) Inventors:
• **Rope, Todd
Thousand Oaks, CA, 91360 (US)**
• **Brocklebank, Chris
Thousand Oaks, CA, 91362 (US)**

(74) Representative: **Grünecker Patent- und
Rechtsanwälte
PartG mbB
Leopoldstraße 4
80802 München (DE)**

(54) **BIAS CONTROL FOR MACH-ZEHNDER OPTICAL MODULATORS**

(57) An electro-optical system includes an optical source, an optical modulator, a first photodetector (PD), a second PD, and a control circuit. The optical source generates an optical signal. The optical modulator modulates the optical signal. The first PD detects the optical signal at an input to the optical modulator. The second PD detects the modulated optical signal at an output of the optical modulator. The control circuit sends to the optical modulator a modulation bias signal that includes a tone, determines a DC power ratio between the modulated optical signal detected by the second PD, and the optical signal detected by the first PD, and sets a bias of the optical modulator according to both (i) the DC power ratio and (i) an amplitude of a second harmonic of the tone in the modulated optical signal at the output of the optical modulator.

FIG. 1

## Description

### FIELD OF THE DISCLOSURE

The present disclosure relates to optical modulator systems, and more particularly to bias control of optical modulators such as Mach-Zehnder based modulators.

### BACKGROUND

Optical communication systems rely on modulators to encode electrical signals onto optical carriers for transmission through optical networks. Mach-Zehnder (MZ) modulators are commonly used in these systems due to their ability to provide high-speed modulation. MZ modulators operate by splitting an optical signal into two paths, applying a phase shift (e.g., voltage-controlled) to one or both paths, and then recombining the signals to produce constructive or destructive interference that modulates the optical output.

The performance of MZ modulators depends heavily on maintaining proper bias points during operation. The bias point determines the operating position on the modulator's transfer function and affects parameters such as linearity, extinction ratio, and signal quality. Environmental factors including temperature variations, component aging, and mechanical stress can cause the optimal bias point to drift, leading to degraded system performance.

Background information can be found, for example, in "Stable bias control of Mach-Zehnder modulator for arbitrary optical pulse picking via reference pulse power monitoring", B. Yang et. al. (Optics Express, Vol. 33 (2025), Issue 4, pp. 6689-6696), in which the authors propose a stable bias control scheme of Mach-Zehnder modulator (MZM) for optical pulse picking. The key to this method is introducing a reference optical pulse signal that is time-shifted relative to the electrical selection signal, ensuring that the output power of the reference pulse is independent of the selection signal and reaches its minimum value at the MZM's minimum bias point.

Further background can be found in U.S. patent application publication 2017/0059889, which describes an integrated optical modulator device that includes a driver module coupled to an optical modulator. The optical modulator is characterized by a raised cosine transfer function and can be coupled to a light source and a bias control module, which is configured to apply an off-quadrature bias to the optical modulator. This bias is accomplished by applying an inverse of the modulator transfer function to the optical modulator in order to minimize a noise variance.

The description above is presented as a general overview of related art in this field and should not be construed as an admission that any of the information it contains constitutes prior art against the present patent application.

## SUMMARY

An embodiment that is described herein provides an electro-optical system including an optical source, an optical modulator, a first photodetector (PD), a second PD, and a control circuit. The optical source is configured to generate an optical signal. The optical modulator is configured to modulate the optical signal. The first PD is configured to detect the optical signal at an input to the optical modulator. The second PD is configured to detect the modulated optical signal at an output of the optical modulator. The control circuit is configured to send to the optical modulator a modulation bias signal that includes a tone, to determine a DC power ratio between the modulated optical signal detected by the second PD, and the optical signal detected by the first PD, and to set a bias of the optical modulator according to both (i) the DC power ratio and (i) an amplitude of a second harmonic of the tone in the modulated optical signal at the output of the optical modulator.

In some embodiments, the control circuit is configured to (a) measure, in the signal at the output of the optical modulator, a ratio between an amplitude of the second harmonic of the tone and a fundamental amplitude of the tone, and (b) determine the bias of the optical modulator according to the ratio.

In some embodiments, the optical modulator includes an interferometer. In an example embodiment, the optical modulator includes a Mach-Zehnder interferometer. In another embodiment, the optical modulator includes a micro-ring resonator.

In some embodiments, the control circuit includes (i) a first loop that sets the bias according to the DC power ratio and to an offset, and (ii) a second loop that adjusts the offset according to the second harmonic of the tone. In an example embodiment, the control circuit is configured to adapt the second loop more slowly than the first loop.

There is additionally provided, in accordance with an embodiment that is described herein, an electro-optical system including an optical source, an optical modulator, a first PD, a second PD, and a control circuit. The optical source is configured to generate an optical signal. The optical modulator is configured to modulate the optical signal. The first PD is configured to detect the optical signal at an input to the optical modulator. The second PD is configured to detect the modulated optical signal at an output of the optical modulator. The control circuit is configured to send to the optical modulator a modulation bias signal that includes a tone, to measure, in the signal at the output of the optical modulator, a ratio between an amplitude of the second harmonic of the tone and a fundamental amplitude of the tone, and to set a bias of the optical modulator according to the ratio.

There is also provided, in accordance with an embodiment that is described herein, a method including generating an optical signal, and modulating the optical signal using an optical modulator. The optical signal at an input to the optical modulator, and the modulated optical signal at an output of the optical modulator, are detected. A modulation bias signal that includes a tone is sent to the optical modulator. A DC power ratio is determined between the modulated optical signal detected at the output of the optical modulator, and the optical signal detected at the input to the optical modulator. A bias of the optical modulator is set according to both (i) the DC power ratio and (i) an amplitude of a second harmonic of the tone in the modulated optical signal at the output of the optical modulator.

There is further provided, in accordance with an embodiment that is described herein, a method including generating an optical signal and modulating the optical signal using an optical modulator. The optical signal at an input to the optical modulator, and the modulated optical signal at an output of the optical modulator, are detected. A modulation bias signal that includes a tone is sent to the optical modulator. A ratio, between an amplitude of the second harmonic of the tone and a fundamental amplitude of the tone, is measured in the signal at the output of the optical modulator. A bias of the optical modulator is set according to the ratio.

The present disclosure will be more fully understood from the following detailed description of the embodiments thereof, taken together with the drawings in which:

## BRIEF DESCRIPTION OF THE DRAWINGS

Fig. 1 is a block diagram that schematically illustrates an optical system that includes modulator bias control, in accordance with an embodiment that is disclosed herein;
Fig. 2 is a block diagram that schematically illustrates a calibration system, in accordance with an embodiment that is disclosed herein;
Fig. 3 is a flowchart that schematically illustrates a method for the calibration of an optical modulator system, in accordance with an embodiment that is disclosed herein;
Fig. 4 is a block diagram that schematically illustrates an MZ bias control flow, in accordance with an embodiment that is disclosed herein; and
Fig. 5 is a flowchart that schematically illustrates a method for MZ bias control, in accordance with an embodiment that is disclosed herein.

## DETAILED DESCRIPTION OF EMBODIMENTS

OVERVIEW

Mach-Zehnder modulators in optical communication systems require precise bias control to maintain optimal performance, but existing control methods face trade-offs between measurement speed and accuracy.

Environmental factors and component aging, for example, can cause bias drift, leading to degraded system performance when relying on single-parameter control approaches.

Embodiments that are described below provide for bias control that is both fast and accurate, using a dual-parameter bias control system that combines DC power ratio measurements with second harmonic to fundamental tone ratio (AC ratio) measurements. In embodiments, this approach provides both rapid response and long-term accuracy by utilizing a fast control loop for immediate adjustments and a slower correction loop for higher accuracy.

A calibration system embodiment, to be described below, establishes reference parameters during beginning-of-life testing (and/or at any other time when recalibration is needed) by optimizing modulator performance and storing initial bias conditions, with respective DC and AC ratios.

A control flow embodiment implements hierarchical control loops that operate at different time scales to balance speed and accuracy requirements. The fast loop may provide immediate bias corrections based on DC power measurements, while the slow loop may adjust the fast loop's target based on harmonic analysis.

A bias control method embodiment describes a flowchart for maintaining optimal modulator bias during system operation. The method may continuously monitor both DC and AC signal characteristics to detect bias drift and apply appropriate corrections.

SYSTEM DESCRIPTION

The following detailed description presents exemplary embodiments of a Mach-Zehnder modulator bias control system that addresses the challenges of maintaining optimal bias points in optical communication systems. The primary goal is to provide a robust control methodology that combines the speed advantages of input-output power ratio measurements with the accuracy benefits of tone-based harmonic ratio measurements (AC ratio).

The disclosed system utilizes a fast control loop based on light signal input to output power ratio (DC ratio) measurements, to provide rapid limited-accuracy bias adjustments, while simultaneously employing a slower control loop based on the more accurate second harmonic to fundamental tone ratio measurements, to correct the fast control loop operation. We will refer hereinbelow to the light signal input to output power ratio as DC ratio (or DCR) and, to the second harmonic to fundamental tone ratio as AC ratio (or ACR).

The slower control loop updates the bias that is set by the fast control loop, by the addition of an offset. Two variants are described - a fast correction, wherein, upon each new calculation, the offset is immediately updated, and a gradual correction, wherein abrupt changes in the offset are low-pass filtered.

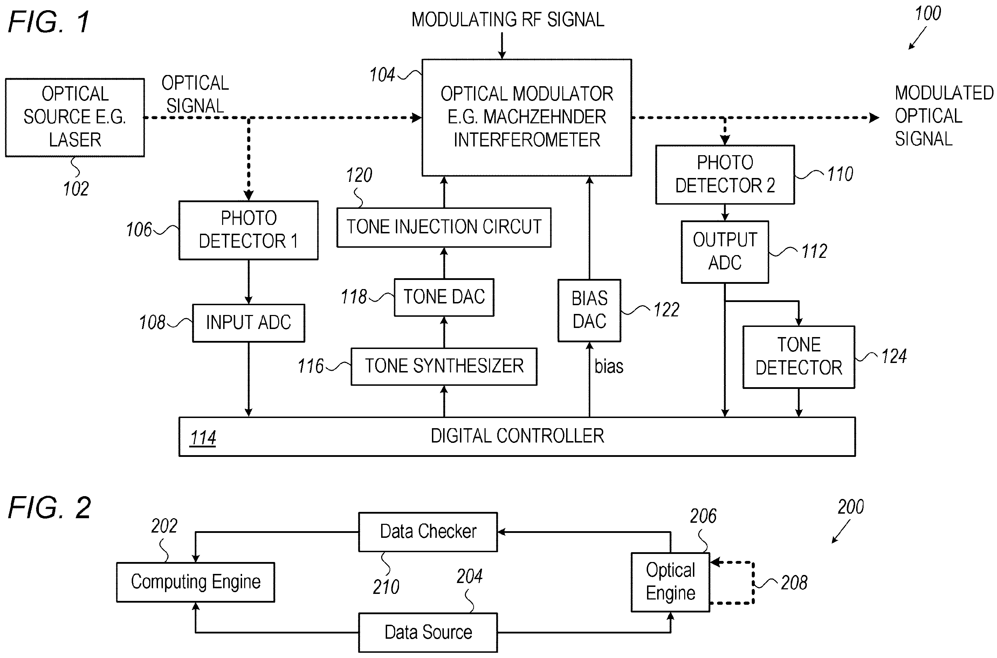

Fig. 1 is a block diagram that schematically illustrates an optical system 100 that includes modulator bias control, in accordance with an embodiment that is disclosed herein. The optical system comprises an optical source 102, an optical modulator 104, a first photodetector 106, an input ADC 108, a second photodetector 110, an output ADC 112 and a digital controller 114. The optical source, which, in embodiments, may comprise a laser, generates an optical signal that is transmitted to the optical modulator. The optical modulator receives both the optical signal from the optical source and a modulating RF signal from an external source. In an embodiment, optical modulator 104 may comprise a Mach-Zehnder (MZ) interferometer that modulates the optical signal based on the modulating RF signal to produce a modulated optical signal. In another embodiment, optical modulator 104 may comprise a micro-resonator, and in yet other embodiments, other suitable types of optical modulators may be used.

A portion of the optical signal from the optical source 102 is directed to the first photodetector 106, which monitors the input optical signal and sends a respective first electrical signal to input ADC 108. The input ADC converts the first electrical signal to a first digital signal and sends the digital signal to digital controller 114.

Similarly, a portion of the modulated optical signal that the optical modulator outputs is directed to the second photodetector 110, which converts the optical signal to a second electrical signal; output ADC 112 then converts the second electrical signal to a second digital signal and sends the digital signal to digital controller 114.

To control the bias of the optical modulator, optical system 100 further comprises a tone synthesizer 116, a tone digital to analog converter (DAC) 118, a tone injection circuit 120 and a bias-DAC 122.

According to the example embodiment illustrated in Fig. 1, a tone (e.g., a 100KHz sinewave), is injected into the optical modulator. Tone synthesizer 116 generates a precise tone using digital synthesis techniques. Tone DAC 118 converts the synthesized tone to an analog signal, and tone injection circuit 120 injects the tone into the optical modulator.

Digital controller 114 receives signals from input ADC 108, from output ADC 112, and from a tone-detector circuit 124, which detects the tone's second harmonics in the modulated output signal. The digital controller processes these inputs to control the bias point of the optical modulator, implementing both power-ratio-based and tone-based control schemes to maintain optimal modulator performance. In some embodiments, the digital controller outputs a digital bias, which is converted to an analog signal by bias DAC 122. The analog bias is input into the optical modulator. The tone that the tone injection circuit sends to the optical modulator is added to the bias.

Thus, according to the example embodiment illustrated in Fig. 1, a tone injection circuit adds a tone to an MZ bias; a digital control circuit monitors the light power at the input and at the output of the MZ modulator, and, based on both the input to output power ratio and the second harmonic power to tone power ratio, adjust to bias voltage for improved MZ performance.

The configuration of optical system 100 illustrated in Fig. 1 and described hereinabove is cited by way of example. Other configurations may be used in alternative embodiments. For example, in some embodiments, the optical system does not comprise a synthesizer; instead, the digital controller generates the tone using sine tables, which may be stored in a read-only memory (ROM).

INITIAL CALIBRATION

Fig. 2 is a block diagram that schematically illustrates a calibration system 200, in accordance with an embodiment that is disclosed herein. The calibration system 200 comprises a computing engine 202, a data source 204, an optical engine 206, an optical feedback path 208, and a data checker 210.

The computing engine serves as a central processing component that coordinates the calibration operations. The computing engine connects to the data source, which is configured to generate a test signal (e.g., pseudo-random binary sequence (PRBS)) that is required for the calibration process. The test signal is input to the optical engine, which comprises an optical modulator (e.g., MZ). The optical modulator uses the test signal to modulate a light source.

The optical feedback path 208 forms a feedback loop and sends the modulated light back to the optical engine, which further comprises an optical receiver/demodulator that decodes the modulated signal. The data checker 210 compares the sent signal to the received signal and sends the comparison results to the computing engine. Thus, the computing engine can test the optical system with various bias voltages and find the best performance (e.g., the bias voltage that produces the best comparison results).

Thus, Calibration system 200, illustrated in Fig. 2 and described hereinabove, allows the optical system to perform calibration measurements and establish initial parameters for subsequent bias control operations.

The configuration of calibration system 200 illustrated in Fig. 2 and described hereinabove is cited by way of example. Other configurations may be used in alternative embodiments. For example, in an embodiment, the optical system to be calibrated comprises a transmitter only, and calibration is done by optically coupling the calibration system to an optical receiver system; the data checker, in this case, may be in the optical receiver system, and the checking results may be fed back to the calibration system, e.g., via an electrical connection.

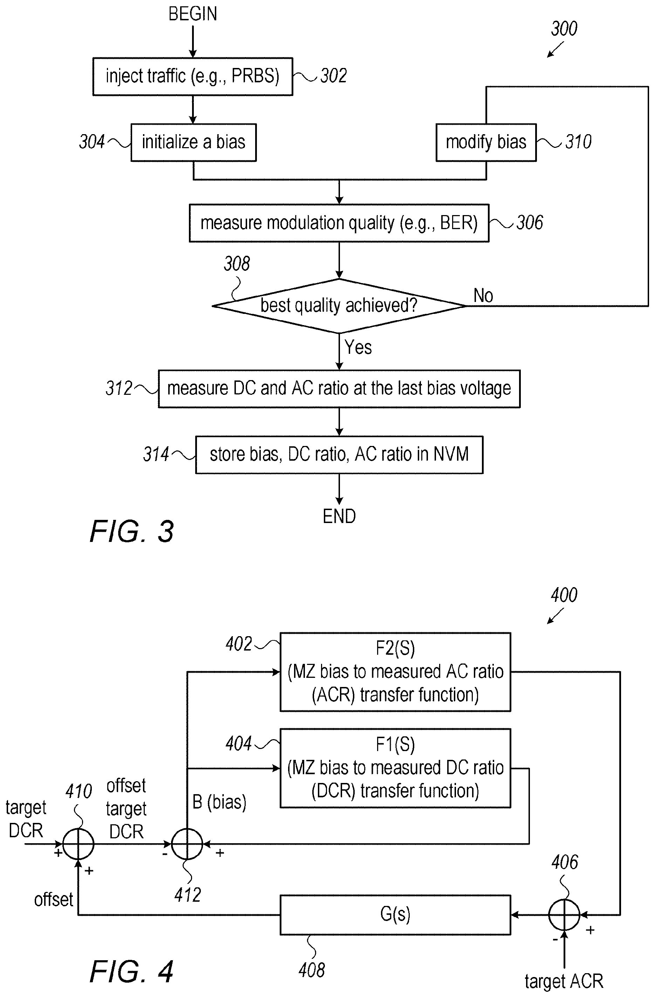

Fig. 3 is a flowchart that schematically illustrates a method 300 for the calibration of an optical modulator system, in accordance with an embodiment that is disclosed herein. The method is executed by calibration system 200 (Fig. 2) and by the sub-units thereof.

The method begins with a traffic injection operation 302, where traffic such as PRBS (Pseudo-Random Binary Sequence) is injected into the system. The method then proceeds to an initialize bias operation 304, where the bias applied to the modulator of optical engine 206 is preset to a pre-calibration initial value.

Following the initial bias operation, the flowchart enters a loop to find the best (or sufficiently good) bias voltage. The loop includes a quality measurement operation 306 wherein the calibration system measures a modulation quality criterion such as bit error rate (BER), a check best quality operation 308 and a modify bias operation 310. In some embodiments, modify-bias operation 310 sequentially scans all possible bias values; in other embodiments, more efficient search methods may be used, wherein the calibration system determines a next bias voltage in operation 310 according to the quality measure results of previous iterations of the loop. In an embodiment, rather than looking for a best quality measure, the calibration system compares the quality measure to a preset minimum value and stops the loop when the minimum value is reached.

When the best quality measure is achieved, the flowchart enters a measure ratio operation 312, where the calibration system measures the DC and AC ratios at the last bias voltage. These measurements characterize the optical signal properties at the optimized operating point. The flowchart now proceeds to a storage operation 314, wherein the computing engine stores the bias value, the DC ratio and the AC ratio in a non-volatile memory (NVM).

In some embodiments, the optical system does not comprise an NVM; instead, the ratios are transmitted to an external database for storage in an information file, that may be sent along with the physical component.

Fig. 4 is a block diagram that schematically illustrates an MZ bias control flow 400, in accordance with an embodiment that is disclosed herein. A bias to AC ratio control function F2(s) 402 defines the combined bias to AC ratio transfer function and the actual measurement (mostly delay) transfer function.

A bias to DC ratio control function F1(s) 404 defines the combined bias to DC ratio transfer function and any measurements errors, such as photo-diode mismatches, etc.

The bias to AC ratio control function and the bias to DC ratio control function receive a bias input. The bias to AC ratio control function produces an output that is input to a subtractor 406, which compares the measured AC Ratio to a target AC Ratio.

The difference between the measured and target AC Ratio is input to a transfer function G(s) 408 (e.g., a PID controller). The output of G(s) function 408 is an offset that is used to correct the DC based bias control. An Adder 410 adds the sum to a target DC ratio; the sum is input to a subtractor 412, which subtracts the sum from the output of F1(s) 404, to form the bias B of the MZ interferometer.

The Laplace-space bias function can be derived from the MZ bias control flow 400:

$$\mathrm{B} = \frac{-DC_{target} + G(s) * AC_{target}}{1 - F1(s) + F2(s) * G(s)}$$

With a suitable G(s) function, stable behavior with good, fast-converging unit-step response can be achieved.

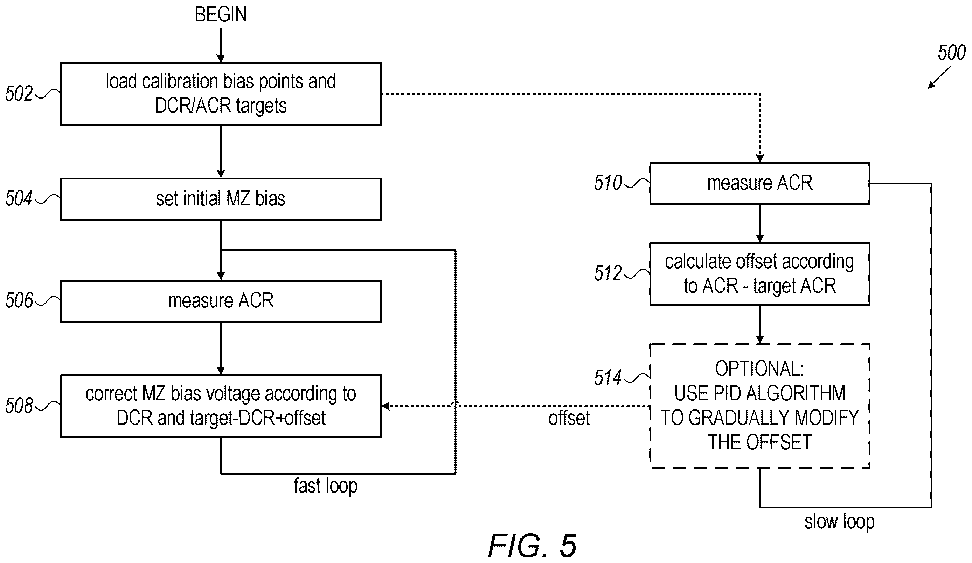

Fig. 5 is a flowchart that schematically illustrates a method 500 for MZ bias control, in accordance with an embodiment that is disclosed herein. The method is executed by optical system 100 (Fig. 1).

Method 500 begins with a load calibration data operation 502, wherein the calibration bias points and DCR/ACR targets are loaded. The method then proceeds to an initialize bias operation 504, wherein digital control 112 (Fig. 1) initializes the MZ bias voltage according to the value, which was loaded in operation 502.

Next, the method proceeds to a measure DCR operation 506, wherein the digital control measures the DC ratio (DCR), according to the outputs of photodetector 1 106 and photodetector 2 108. The method then enters a correct bias operation 508, in which the digital control corrects the MZ bias voltage according to DCR and to the sum of the target DCR and an offset value. After operation 508, the method returns to operation 506.

The sequence of operations 506 and 508 forms a fast loop that is typically executed as long as power is applied to the circuit. The fast loop controls the MZ bias based on the DCR, and on a correction offset.

In parallel to the fast loop, the method comprises a slow loop, including a measure-ACR operation 510 that is followed by a calculate offset according to ACR operation 512, and, optionally, by a PID offset modification operation 514. The fast loop controls the offset value according to the ACR.

Thus, bias control method 500 implements a dual-loop control architecture where the fast loop, comprising the measure DCR operation 506 and the correct bias operation 508, provides rapid bias adjustments, while the slow loop, comprising the measure ACR operation 510, the calculate offset operation 512, and the optional offset PID control operation 514, provides long-term correction to compensate for drift or measurement errors.

The configuration of method 500 illustrated in Fig. 5 and described hereinabove is cited by way of example. Other configurations may be used in alternative embodiments. For example, in an embodiment, the bias voltage calculated in operation 508 is deemed more accurate than the bias found during calibration (for example, component aging may occur after the initial calibration) and, therefore, the bias derived in operation 408 may be stored in the NVM, replacing the calibration data.

The configurations of optical system 100 and calibration system 200, including all subcircuits thereof; the control flow 400, the calibration method 300 and the bias control method 500 illustrated in Figs. 1 through 5 and described hereinabove, are example configurations, control flows and methods that are shown purely for the sake of conceptual clarity. Any other suitable configurations, control flows and methods can be used in alternative embodiments. The different elements of optical system 100 and calibration system 200 may be implemented in integrated circuits, such as an application specific integrated circuit (ASIC) or a field-programmable gate-array (FPGA). Some elements of optical system 200 and calibration system 300 may be implemented in software, in hardware, or in combination of software and hardware elements.

Digital Controller 112 (Fig. 1) and/or computing engine 202 (Fig. 2) typically comprise a general-purpose processor, which is programmed in software to carry out the functions described herein. The software may be downloaded to the processor in electronic form, over a network, for example, or it may, alternatively or additionally, be provided and/or stored on non-transitory tangible media, such as magnetic, optical, or electronic memory.

Although the embodiments described herein mainly address the setting of a bias voltage in an optical modulator, the methods and systems described herein can also be used in other applications, such as in optical multiplexing and demultiplexing.

It is noted that the embodiments described above are cited by way of example, and that the present invention is not limited to what has been particularly shown and described hereinabove. Rather, the scope that is disclosed herein includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

**THE FOLLOWING IS A LIST OF FURTHER PREFERRED EMBODIMENTS OF THE INVENTION:**

Embodiment 1. An electro-optical system, comprising:

an optical source configured to generate an optical signal;
an optical modulator configured to modulate the optical signal;
a first photodetector (PD) configured to detect the optical signal at an input to the optical modulator;
a second PD configured to detect the modulated optical signal at an output of the optical modulator; and
a control circuit, configured to:

send to the optical modulator a modulation bias signal that comprises a tone;
determine a DC power ratio between the modulated optical signal detected by the second PD, and the optical signal detected by the first PD; and
set a bias of the optical modulator according to both (i) the DC power ratio and (i) an amplitude of a second harmonic of the tone in the modulated optical signal at the output of the optical modulator.

Embodiment 2. The electro-optical system according to embodiment 1, wherein the control circuit is configured to:

measure, in the signal at the output of the optical modulator, a ratio between an amplitude of the second harmonic of the tone and a fundamental amplitude of the tone; and
determine the bias of the optical modulator according to the ratio.

Embodiment 3. The electro-optical system according to embodiment 1, wherein the optical modulator comprises an interferometer.

Embodiment 4. The electro-optical system according to embodiment 1, wherein the optical modulator comprises a Mach-Zehnder interferometer.

Embodiment 5. The electro-optical system according to embodiment 1, wherein the optical modulator comprises a micro-ring resonator.

Embodiment 6. The electro-optical system according to embodiment 1, wherein the control circuit comprises (i) a first loop that sets the bias according to the DC power ratio and to an offset, and (ii) a second loop that adjusts the offset according to the second harmonic of the tone.

Embodiment 7. The electro-optical system according to embodiment 6, wherein the control circuit is configured to adapt the second loop more slowly than the first loop.

Embodiment 8. An electro-optical system, comprising:

an optical source configured to generate an optical signal;

an optical modulator configured to modulate the optical signal;

a first photodetector (PD) configured to detect the optical signal at an input to the optical modulator;

a second PD configured to detect the modulated optical signal at an output of the optical modulator; and

a control circuit, configured to:

send to the optical modulator a modulation bias signal that comprises a tone;

measure, in the signal at the output of the optical modulator, a ratio between an amplitude of the second harmonic of the tone and a fundamental amplitude of the tone; and

set a bias of the optical modulator according to the ratio.

Embodiment 9. The electro-optical system according to embodiment 8, wherein the optical modulator comprises an interferometer.

Embodiment 10. The electro-optical system according to embodiment 8, wherein the optical modulator comprises a Mach-Zehnder interferometer.

Embodiment 11. The electro-optical system according to embodiment 8, wherein the optical modulator comprises a micro-ring resonator.

Embodiment 12. A method, comprising:

generating an optical signal;

modulating the optical signal using an optical modulator;

detecting the optical signal at an input to the optical modulator;

detecting the modulated optical signal at an output of the optical modulator;

sending to the optical modulator a modulation bias signal that comprises a tone;

determining a DC power ratio between the modulated optical signal detected at the output of the optical modulator, and the optical signal detected at the input to the optical modulator; and

setting a bias of the optical modulator according to both (i) the DC power ratio and (i) an amplitude of a second harmonic of the tone in the modulated optical signal at the output of the optical modulator.

Embodiment 13. The method according to embodiment 12, wherein setting the bias comprises:

measuring, in the signal at the output of the optical modulator, a ratio between an amplitude of the second harmonic of the tone and a fundamental amplitude of the tone; and

determining the bias of the optical modulator according to the ratio.

Embodiment 14. The method according to embodiment 12, wherein the optical modulator comprises an interferometer.

Embodiment 15. The method according to embodiment 12, wherein the optical modulator comprises a Mach-Zehnder interferometer.

Embodiment 16. The method according to embodiment 12, wherein the optical modulator comprises a micro-ring resonator.

Embodiment 17. A method, comprising:

generating an optical signal;

modulating the optical signal using an optical modulator;

detecting the optical signal at an input to the optical modulator;

detecting the modulated optical signal at an output of the optical modulator;

sending to the optical modulator a modulation bias signal that comprises a tone;

measuring, in the signal at the output of the optical modulator, a ratio between an amplitude of the second harmonic of the tone and a fundamental amplitude of the tone; and

setting a bias of the optical modulator according to the ratio.

Embodiment 18. The method according to embodiment 17, wherein the optical modulator comprises an interferometer.

Embodiment 19. The method according to embodiment 17, wherein the optical modulator comprises a Mach-Zehnder interferometer.

Embodiment 20. The method according to embodiment 17, wherein the optical modulator comprises a micro-ring resonator.

**Claims**

1. An electro-optical system, comprising:

an optical source configured to generate an optical signal;

an optical modulator configured to modulate the optical signal;

a first photodetector (PD) configured to detect the optical signal at an input to the optical modulator;

a second PD configured to detect the modulated optical signal at an output of the optical modulator; and

a control circuit, configured to:

> send to the optical modulator a modulation bias signal that comprises a tone;
> determine a DC power ratio between the modulated optical signal detected by the second PD, and the optical signal detected by the first PD; and
> set a bias of the optical modulator according to both (i) the DC power ratio and (i) an amplitude of a second harmonic of the tone in the modulated optical signal at the output of the optical modulator.

2. The electro-optical system according to claim 1, wherein the control circuit is configured to:

> measure, in the signal at the output of the optical modulator, a ratio between an amplitude of the second harmonic of the tone and a fundamental amplitude of the tone; and
> determine the bias of the optical modulator according to the ratio.

3. The electro-optical system according to claim 1 or 2, wherein the optical modulator comprises an interferometer.

4. The electro-optical system according to one of claims 1 to 3, wherein the optical modulator comprises a Mach-Zehnder interferometer.

5. The electro-optical system according to one of claims 1 to 4, wherein the optical modulator comprises a micro-ring resonator.

6. The electro-optical system according to one of claims 1 to 5, wherein the control circuit comprises (i) a first loop that sets the bias according to the DC power ratio and to an offset, and (ii) a second loop that adjusts the offset according to the second harmonic of the tone.

7. The electro-optical system according to claim 6, wherein the control circuit is configured to adapt the second loop more slowly than the first loop.

8. An electro-optical system, comprising:

> an optical source configured to generate an optical signal;
> an optical modulator configured to modulate the optical signal;

a first photodetector (PD) configured to detect the optical signal at an input to the optical modulator;

a second PD configured to detect the modulated optical signal at an output of the optical modulator; and

a control circuit, configured to:

> send to the optical modulator a modulation bias signal that comprises a tone;
> measure, in the signal at the output of the optical modulator, a ratio between an amplitude of the second harmonic of the tone and a fundamental amplitude of the tone; and
> set a bias of the optical modulator according to the ratio.

9. The electro-optical system according to claim 8, wherein the optical modulator comprises an interferometer.

10. The electro-optical system according to claim 8 or 9, wherein the optical modulator comprises a Mach-Zehnder interferometer, or wherein the optical modulator comprises a micro-ring resonator.

11. A method, comprising:

> generating an optical signal;
> modulating the optical signal using an optical modulator;
> detecting the optical signal at an input to the optical modulator;
> detecting the modulated optical signal at an output of the optical modulator;
> sending to the optical modulator a modulation bias signal that comprises a tone;
> determining a DC power ratio between the modulated optical signal detected at the output of the optical modulator, and the optical signal detected at the input to the optical modulator; and
> setting a bias of the optical modulator according to both (i) the DC power ratio and (i) an amplitude of a second harmonic of the tone in the modulated optical signal at the output of the optical modulator.

12. The method according to claim 11, wherein setting the bias comprises:

> measuring, in the signal at the output of the optical modulator, a ratio between an amplitude of the second harmonic of the tone and a fundamental amplitude of the tone; and
> determining the bias of the optical modulator according to the ratio.

13. The method according to claim 11 or 12, wherein the optical modulator comprises an interferometer, or wherein the optical modulator comprises a Mach-Zehnder interferometer, or wherein the optical modulator comprises a micro-ring resonator.

14. A method, comprising:

generating an optical signal;
modulating the optical signal using an optical modulator;
detecting the optical signal at an input to the optical modulator;
detecting the modulated optical signal at an output of the optical modulator;
sending to the optical modulator a modulation bias signal that comprises a tone;
measuring, in the signal at the output of the optical modulator, a ratio between an amplitude of the second harmonic of the tone and a fundamental amplitude of the tone; and
setting a bias of the optical modulator according to the ratio.

15. The method according to claim 14, wherein the optical modulator comprises an interferometer, or wherein the optical modulator comprises a Mach-Zehnder interferometer, or wherein the optical modulator comprises a micro-ring resonator.

FIG. 1

MODULATING RF SIGNAL

OPTICAL SOURCE E.G. LASER — 102

OPTICAL SIGNAL

104 — OPTICAL MODULATOR E.G. MACHZEHNDER INTERFEROMETER

MODULATED OPTICAL SIGNAL

106 — PHOTO DETECTOR 1

120 — TONE INJECTION CIRCUT

PHOTO DETECTOR 2 — 110

108 — INPUT ADC

118 — TONE DAC

BIAS DAC — 122

OUTPUT ADC — 112

116 — TONE SYNTHESIZER

bias

TONE DETECTOR — 124

114 — DIGITAL CONTROLLER

FIG. 2

202 — Computing Engine

Data Checker

206

Optical Engine

208

210      204

Data Source

200

EP 4 760 378 A1

BEGIN

inject traffic (e.g., PRBS) ～302

300

304 ～ initialize a bias

modify bias ～310

measure modulation quality (e.g., BER) ～306

308

best quality achieved? No

Yes

312 ～ measure DC and AC ratio at the last bias voltage

314 ～ store bias, DC ratio, AC ratio in NVM

END

*FIG. 3*

400

402 ～ F2(S)
(MZ bias to measured AC ratio (ACR) transfer function)

404 ～ F1(S)
(MZ bias to measured DC ratio (DCR) transfer function)

406

target DCR

410 offset target DCR

B (bias)

412

offset

target ACR

G(s)

408

*FIG. 4*

BEGIN

| | |
|---|---|
| 502 | load calibration bias points and DCR/ACR targets |

| | |
|---|---|
| 504 | set initial MZ bias |

| | |
|---|---|
| 506 | measure ACR |

| | |
|---|---|
| 508 | correct MZ bias voltage according to DCR and target-DCR+offset |

fast loop

500

| | |
|---|---|
| 510 | measure ACR |

| | |
|---|---|
| 512 | calculate offset according to ACR - target ACR |

| | |
|---|---|
| 514 | OPTIONAL: USE PID ALGORITHM TO GRADUALLY MODIFY THE OFFSET |

offset

slow loop

FIG. 5

Europäisches
Patentamt

European
Patent Office

Office européen
des brevets

# EUROPEAN SEARCH REPORT

**Application Number**

EP 25 22 3787

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/036610 A1 (ROPE TODD [US] ET AL) 31 January 2019 (2019-01-31) * claims 10-11 * * paragraph [0008] - paragraph [0010] * * paragraph [0092] - paragraph [0133] * * figure 26 * * figure 28 * ----- | 1-15 | INV. G02F1/01 G02F1/21 G02F1/225 |
| Y | US 2024/340087 A1 (WEN YANGJING [US] ET AL) 10 October 2024 (2024-10-10) * paragraph [0007] * ----- | 1-15 | |
| Y | US 10 509 243 B2 (ELENION TECH LLC [US]) 17 December 2019 (2019-12-17) * column 5, line 20 - line 25 * * column 17, line 63 - column 18, line 20 * * column 18, line 31 - line 46 * * column 20, line 65 - column 21, line 8 * * Page number 6 * * Page number 11 * ----- | 5 | |
| A | US 11 509 275 B2 (NEOPHOTONICS CORP [US]) 22 November 2022 (2022-11-22) * figure 1 * ----- | 1-15 | TECHNICAL FIELDS SEARCHED (IPC)  G02F |

The present search report has been drawn up for all claims

| Place of search | Date of completion of the search | Examiner |
|---|---|---|
| The Hague | 12 April 2026 | Votini, Stefano |

EPO FORM 1503 03.82 (P4C01)

## ANNEX TO THE EUROPEAN SEARCH REPORT
## ON EUROPEAN PATENT APPLICATION NO.

EP 25 22 3787

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2026

| Patent document cited in search report | Publication date | Patent family member(s) | | Publication date |
|---|---|---|---|---|
| US 2019036610 A1 | 31-01-2019 | US | 9838134 B1 | 05-12-2017 |
| | | US | 2018062751 A1 | 01-03-2018 |
| | | US | 2019036610 A1 | 31-01-2019 |
| | | US | 2019363799 A1 | 28-11-2019 |
| US 2024340087 A1 | 10-10-2024 | NONE | | |
| US 10509243 B2 | 17-12-2019 | US | 2018267340 A1 | 20-09-2018 |
| | | US | 2020081277 A1 | 12-03-2020 |
| US 11509275 B2 | 22-11-2022 | US | 2019324298 A1 | 24-10-2019 |
| | | US | 2023046863 A1 | 16-02-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170059889

**Non-patent literature cited in the description**

- **B. YANG**. Stable bias control of Mach-Zehnder modulator for arbitrary optical pulse picking via reference pulse power monitoring. *Optics Express*, 2025, vol. 33 (4), 6689-6696